# EUROPEAN PATENT APPLICATION

(11) **EP 0 664 190 A1**
(43) Date of publication of application: **26.07.1995**
(21) Application number: 95100618.8
(22) Date of filing: 18.01.1995
(51) Int. Cl.: B27L 7/00, F16P 3/24

(54) **Horizontal wood riving machine with safety means**

(30) Priority: 24.01.1994 IT MI940109
(71) Applicant: Tomasi, Franco - Caraffini, Maria Rosa, dba TSC di TOMASI FRANCO & C. S.n.c., I-25016 Ghedi (prov. of Brescia) (IT)
(72) Inventor: Tomasi, Franco, I-25016 Ghedi (IT)
(74) Representative: Modiano, Guido, Dr.-Ing.

(57) **Abstract**

A horizontal wood riving machine with safety means, comprising a framework that supports a pusher piston which is actuated by fluid-activated means (17) and is suitable to push a log to be split against a wedge-like riving knife (11) that is supported by the framework. The particularity of the invention resides in that it comprises a first lever (20) and a second lever (21) for activating the fluid-activated means; the levers are spaced from each other and are connected to an actuator (25) for actuating the fluid-activated means (17). The levers (20,21) can be actuated simultaneously by both hands of a user to activate the fluid-activated means to provide the active stroke of the pusher piston.

## Description

The present invention relates to a horizontal wood riving machine with safety means.

Conventional horizontal wood riving machines are already known that substantially have a supporting framework on which a pusher piston is mounted; said piston is actuated by fluid-activated means constituted by a pump which is driven by an electric motor or by an internal-combustion engine and sends, by means of a distribution unit, the hydraulic fluid inside the cylinder to produce the stroke of the piston. The piston pushes the wood log to be riven against a wedge-like riving knife that can have various shapes, thus breaking the log into several pieces.

The pusher piston is currently actuated by means of an actuation system that has a pedal or a single lever which is operated by the user, so as to send the oil into the piston to produce movement in the active stroke of the pusher piston.

These types of apparatus do not have absolute safety characteristics, since the user may reach the piston movement region with his hands and said piston, owing to the considerable thrust pressures, might cause even severe injury.

A principal aim of the present invention is indeed to eliminate the drawbacks described above by providing a horizontal wood riving machine with safety means that require the operator to use both hands in order to actuate the pusher piston in its active stroke, so that said operator is absolutely prevented from making accidental contact with the moving pusher piston.

Within the scope of this aim, a particular object of the invention is to provide a horizontal wood riving machine that allows to adjust the active stroke according to the length to be cut without thereby having to resort to particular modifications of the machine.

Another object of the present invention is to provide a wood riving machine which, when not in use, can be arranged vertically, consequently reducing its bulk.

Another object of the present invention is to provide a horizontal wood riving machine with safety means that is capable of giving the greatest assurances of reliability and safety in use by virtue of its particular constructive characteristics.

Another object of the present invention is to provide a horizontal wood riving machine with safety means that can be easily obtained starting from commonly commercially available elements and materials and is furthermore competitive from a merely economical point of view.

This aim, these objects, and others which will become apparent hereinafter are achieved by a horizontal wood riving machine with safety means, according to the invention, which comprises a framework that supports a pusher piston which is actuated by fluid-activated means and is suitable to push a log to be split against a wedge-like riving knife that is supported by said framework, characterized in that it comprises a first lever and a second lever for activating said fluid-activated means, said levers being spaced from each other and being connected to an actuator for actuating said fluid-activated means, and in that said levers can be actuated simultaneously by both hands of a user to activate said fluid-activated means to provide the active stroke of said pusher piston.

Further characteristics and advantages will become apparent from the following detailed description of a preferred but not exclusive embodiment of a horizontal wood riving machine with safety means, illustrated only by way of non-limitative example in the accompanying drawings, wherein:
figure 1 is a schematic perspective view of the wood riving machine according to the invention;
figure 2 is a plan view of the wood riving machine;
figure 3 is a schematic view of the wood riving machine stored in vertical position, when not in use;
figure 4 is a schematic exploded perspective view of the actuation levers and of the actuator of the fluid-activated means;
figure 5 is a schematic elevation view of the actuator with the machine in inactive condition, that is to say, in the condition in which the pusher piston is retracted and the stroke halving means are disengaged;
figure 6 is a sectional view, taken along the plane VI-VI of figure 5;
figure 7 is a schematic view of the actuator during the actuation of both levers, with the consequent active stroke for the pusher piston;
figure 8 is a sectional view, taken along the plane VIII-VIII of figure 7;
figure 9 is a schematic view of the actuator when only one of the two levers is actuated, stopping the stroke of the piston;
figure 10 is a view of the actuator taken when the levers are released at the beginning of the return stroke of the pusher piston;
figure 11 is a sectional view, taken along the plane XI-XI of figure 10.

With reference to the above figures, the horizontal wood riving machine with safety means, according to the invention, comprises a framework which is generally designated by the reference numeral 1 and is advantageously provided with rear wheels 2 for moving it easily and with a grip bar 3 arranged at the front.

The framework 1 forms, in its upper part, a tubular case 4 for accommodating a pusher piston 5 which advantageously has a square housing that is arranged around the stem of the piston, whereas the body of the cylinder is accommodated inside the case 4; a telescopic coupling is thus provided.

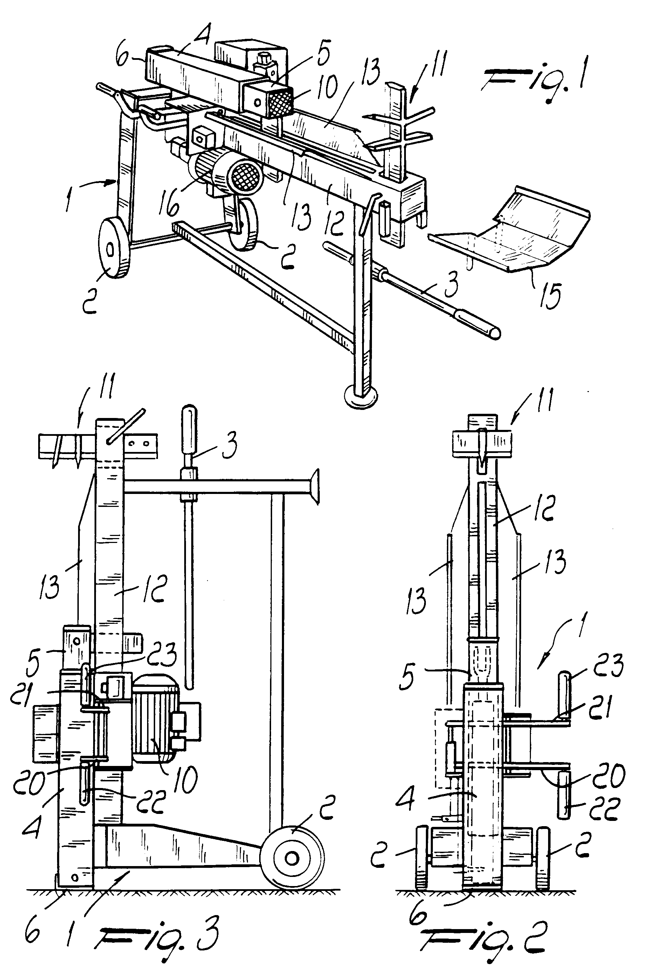

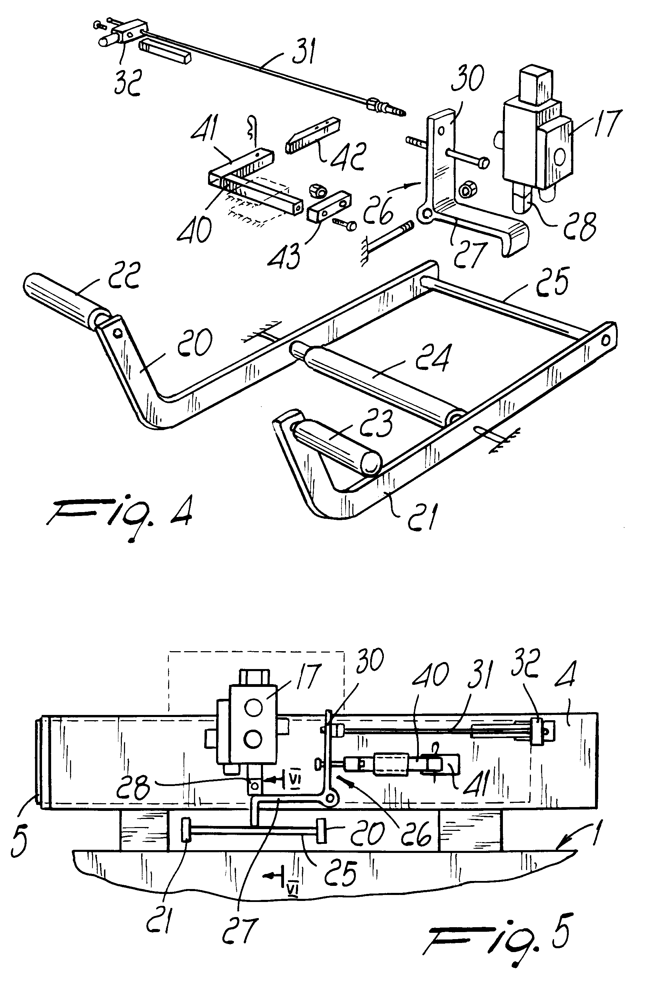

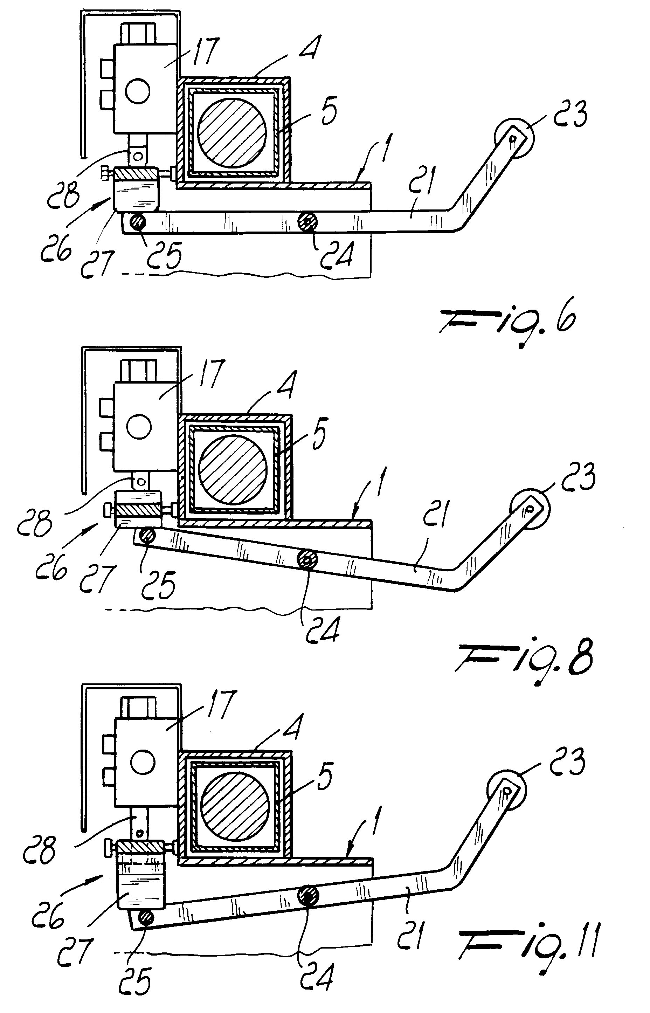

The case 4 has a bottom 6 that allows to rest the framework on the ground when the machine is not used; it is thus possible to arrange the machine in a vertical position, as shown in figure 3, reducing its space occupation.

The pusher piston 5 is provided, at the front, with a presser plate 10 which faces a wedge-like riving knife 11 of the interchangeable type which can be mounted on the upper cross-member 12 of the device.

The upper cross-member has two lateral supports 13 that in practice form the region for accommodating the log to be split.

It is furthermore possible to place a supporting surface 15 for collecting the riven wood behind the wedge-shaped riving knife 11.

A motor 16 is furthermore connected to the framework 1 and drives a fluid-activated pump which, by means of a distribution unit 17, provides the fluid-activated means for actuating the piston 5.

The particularity of the invention resides in the fact that there are two levers 20 and 21 for actuating the fluid-activated means; said levers are arranged side by side and are mutually spaced so that they require simultaneous actuation with both of the user's hands in order to perform the active stroke of the piston, thus constituting a considerable safety criterion since said simultaneous actuation prevents the user's hands from being placed in the piston movement region.

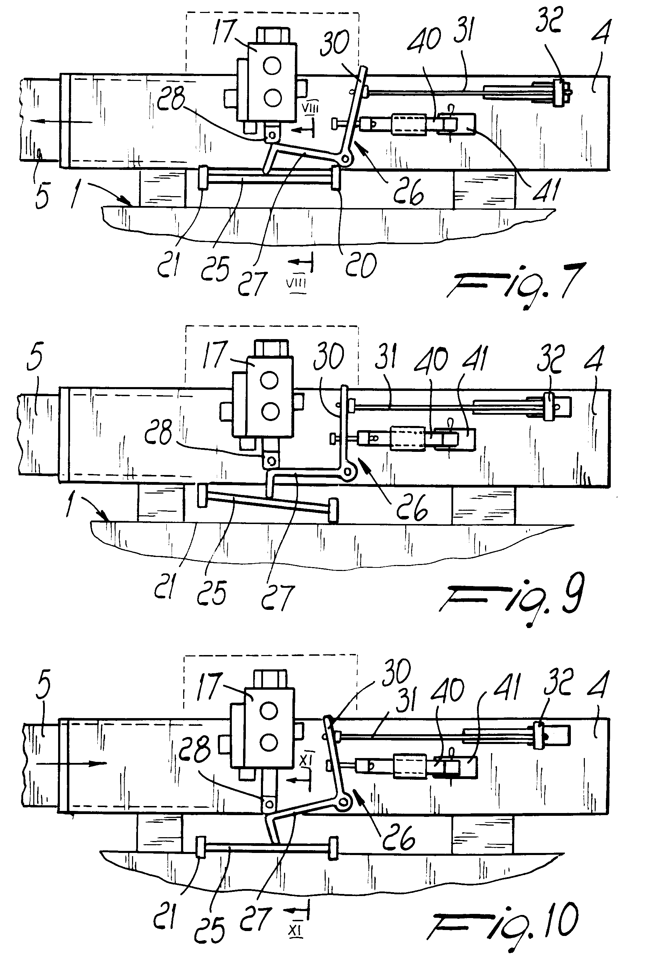

As more clearly shown in figure 4, the levers 20 and 21 have respective handles 22 and 23 and are pivoted, in a median portion, to a bar 24 which is supported by the fixed framework.

At the other end of the levers 20 and 21 there is an actuator 25 that runs parallel to the bar 24 and is supported at its ends by the ends of the levers 20 and 21.

The actuator 25 acts on an L-shaped lever 26 which is pivoted to the framework, in a median portion, and has an actuation arm 27 that engages by contact the median portion of the actuator 25.

The slider 28 of the distribution unit of the fluid-activated means 17 acts above the actuation arm 27.

The distribution unit 17 is configured so that a central position of the slider 28 corresponds to a neutral position, in which the motor is not activated, whereas when one acts by pushing on both levers 20 and 21 the slider 28 moves, so as to retract, consequently actuating the distribution unit 17 to produce the active stroke of the piston 5.

When both levers 20 and 21 are released, the actuator 25 moves downwards and the slider 28 moves outwards, placing the distribution unit 17 in the reversing position that causes the automatic retraction of the piston.

In practice, if the user acts by pressing on both levers 20 and 21, said levers, by moving simultaneously upwards as shown in figures 5 and 6, cause an upward movement of the actuator and consequently of the slider 28 that arranges the distribution unit 17 in the position that produces the active stroke.

If one of the levers is released, the actuator tilts, as shown in figure 9, and the slider moves outwards with respect to the distribution unit 17, arranging itself in the neutral position in which it stops the piston.

By actuating both levers again, the piston restarts, continuing its active stroke; by releasing both levers, the actuator 25 moves downwards and the slider 28 moves outwards with respect to the distribution unit 17, reversing the stroke of the piston, which retracts into the case 4.

The machine is furthermore provided with an automatic stop device, and for this purpose a traction element 31 is connected to the stroke-limiting arm 30 of the L-shaped lever 26 and to a stroke-limiting retainer 32 that enters the case 4 and is actuated by the cylinder that retracts and reaches the end of its stroke.

The piston, by retracting into the case 4, once it has reached the end of its stroke, interacts with the stroke-limiting retainer 32 and by causing it to move, by means of the traction element 31, it makes the L-shaped lever 26 rotate, moving the slider 28 into the neutral position.

It is also possible to provide a half-stroke limiting device which can be used when the logs to be riven are small.

The half-stroke limiting device has a bracket 40 which is slidingly mounted on the outside of the case 4 and has a sleeve 41 in which it is possible to detachably insert a half-stroke limiting pin 42 that interacts with the piston 5 that retracts into the case 4 and causes, in the manner described earlier, the rotation of the lever by virtue of the fact that there is a block 43 for connecting to the stroke-limiting arm 30 of the L-shaped lever 26.

Accordingly, if the half-stroke limiting pin 42 is inserted, the oscillation of the lever 26 that stops the stroke of the pusher is reached when the piston 5 has partially retracted into the case 4, and the rotation of the L-shaped lever 26 limits the stroke.

If the pin 42 is not inserted, the piston continues its retracting stroke until it engages the stroke limiter 32 that stops it in the manner described earlier.

From the above description it is thus evident that the invention achieves the intended aim and objects, and in particular the fact is stressed that a wood riving machine is provided in which it is necessary to act with both hands on the levers 20 and 21 to achieve the active stroke of the piston, that is to say, to make it move outwards so as to push the log to be split against the wedge-shaped riving knife located at the end of the framework.

If the actuation of one lever is interrupted, the actuator 25 arranges itself at an angle and accordingly moves the distribution unit 17 with its slider into the neutral position, stopping the stroke of the pusher.

If both levers are released, the slider moves outwards with respect to the distribution unit 17, with a consequent reversal of the fluid-dynamics cycle that causes the automatic retraction of the piston 5 inside the machine until the stroke limit is reached.

From the above description it is evident that the invention achieves the intended aim and objects, and in particular the fact is stressed that a machine with great safety assurances is provided; these assurances arise from the need to use both hands to operate the machine and from the fact that the piston has a housing which in addition to acting as a guiding element for the piston also acts as a protection element.

Another important aspect is furthermore constituted by the fact that the machine stops automatically at its stroke limit and that said stroke limit can also be provided in an intermediate position.

The invention thus conceived is susceptible of numerous modifications and variations, all of which are within the scope of the inventive concept.

All the details may furthermore be replaced with other technically equivalent elements.

In practice, the materials employed, so long as they are compatible with the specific use, as well as the contingent shapes and dimensions, may be any according to the requirements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. Horizontal wood riving machine with safety means, which comprises a framework that supports a pusher piston (5) which is actuated by fluid-activated means (17) and is suitable to push a log to be split against a wedge-like riving knife (11) that is supported by said framework, characterized in that it comprises a first lever (20) and a second lever (21) for activating said fluid-activated means (17), said levers being spaced from each other and being connected to an actuator (25) for actuating said fluid-activated means (17), and in that said levers (20,21) can be actuated simultaneously by both hands of a user to activate said fluid-activated means (17) to provide the active stroke of said pusher piston (5).

2. Wood riving machine according to the invention, characterized in that said framework forms, in an upward region, a case (4) for accommodating said pusher piston (5), said case (4) having a bottom (6) which is suitable to act as an element for resting the framework on the ground when it is tilted up in inactive position and rests on said bottom and on a pair of maneuvering wheels (2).

3. Wood riving machine according to the preceding claims, characterized in that said levers (20,21) comprise respective handles (22,23) and are pivoted, in a median portion, to a bar (24) which is supported by said framework, said actuator (25) being supported at the other end of said levers (20,21) and extending parallel to said bar (24).

4. Wood riving machine according to one or more of the preceding claims, characterized in that it comprises an L-shaped lever (26) which is pivoted to said framework and in which the end of one (27) of its actuation arms interacts with a median portion of said actuator, a slider (28) of a distribution unit (17) of the fluid-activated means engaging said actuation arm (27).

5. Wood riving machine according to one or more of the preceding claims, characterized in that when one of said levers (20,21) is released said actuator (25) assumes a position that is suitable to block the operation of said fluid-activated piston (5).

6. Wood riving machine according to one or more of the preceding claims, characterized in that when both of said levers (20,21) are released said slider (28) arranges said distribution unit (17) so as to cause the return of said fluid-activated piston (5).

7. Wood riving machine according to one or more of the preceding claims, characterized in that it comprises a stroke-limiting device (32) which is suitable to interact with the housing of said fluid-activated piston (5) and to actuate a traction element (31) which is connected to the stroke-limiting arm (30) of said L-shaped lever.

8. Wood riving machine according to one or more of the preceding claims, characterized in that it comprises a half-stroke limiting device (42) which has a bracket (40) that is slidingly mounted on the outside of said case (4) and has a sleeve (41) in which a half-stroke limiting pin can be removably inserted, said pin interacting with the housing of said piston, said bracket (40) being connected to said stroke-limiting arm of said L-shaped lever by means of a connecting block (43).

9. Horizontal wood riving machine with safety means, characterized in that it comprises one or more of the described and/or illustrated features.
